# EUROPEAN PATENT APPLICATION

(11) **EP 0 933 250 A1**
(43) Date of publication of application: **04.08.1999**
(21) Application number: 99200267.5
(22) Date of filing: 01.02.1999
(51) Int. Cl.: B60P 3/20

(54) **Folding partition wall for thermal separation of compartments in a vehicle**

(30) Priority: 03.02.1998 NL 1008192
(71) Applicant: Load Lok International B.V., 3251 LX Oud-Beijerland (NL)
(72) Inventor: Rath, Robert Michael, 2991 BN Barendrecht (NL); Blokland, Willem, 3097 PB Rotterdam (NL)
(74) Representative: Eveleens Maarse, Pieter

(57) **Abstract**

The invention relates to a partition wall (2) for separating two compartments in a vehicle (1), comprising: a shaft (7) extending perpendicular to the sidewalls; at least one panel (8) which is suspended rotatably from the shaft (7) with an edge so that the panel (8) can be tilted against the ceiling; and locking means for locking the panel (8) in the vertical and in the horizontal position, wherein the partition wall comprises at least two panels (8) which are mutually displaceable in axial direction between a first position, in which both panels make contact with the nearest side wall and a space is left clear between the panels, and a second position, in which both panels make mutual contact and a gap is enclosed between each of the panels (8) and the associated side wall.

According to another preferred embodiment the partition wall (8) comprises axial displacing means for causing the panels to move away from the side walls during upward tilting of both panels adjoining the side walls.

According to another preferred embodiment the axial displacing means are adapted to cause the panels (8) adjoining the side wall to move toward the side walls during downward tilting.

## Description

The invention relates to a partition wall for separating two compartments in a vehicle, comprising:
- a shaft extending parallel to the wall;
- at least one panel which is suspended rotatably from the shaft with one edge so that the panel can be tilted against the ceiling; and
- locking means for locking the panel in the vertical and in the horizontal position.

Such a partition wall is known from the brochure "Isowall" distributed by applicant.

Such a partition wall finds application for instance in the combined transport in one truck of goods whereof the temperature level must be maintained at different values.

This combined transport occurs for instance in the distribution of foodstuffs, for instance combined distribution of deep-frozen goods and refrigerated goods. The deep-frozen goods must be maintained at a temperature of at least -18°C, while the refrigerated goods must be maintained at a temperature of about +5°C.

It is noted here that such combined transport is becoming increasingly widespread since the number of truck journeys can be considerably limited thereby.

Such a truck must therefore be provided with compartments which have to be maintained at different temperatures. In order to separate these compartments use is made of a wall over which a temperature difference of about 25°C must be maintained.

It will also be apparent that it is attractive if the position of this wall can be changed; it will thus be the desire at any one time to transport more deep-freeze articles and fewer refrigerated articles, while this may be the other way round on a subsequent journey.

Such a wall known from the prior art is therefore displaceable.

In order to gain easy access to the compartment it is also known from this prior art to tilt the wall against the ceiling of the truck. This is an operation requiring quite a lot of effort. The wall is on the one hand rather heavy and on the other the wall is provided with seals with which it is sealed against the side walls of the vehicle. During upward tilting these seals slide along the side wall of the vehicle, which produces a rather considerable friction force.

Upward tilting of such a partition wall is thus a disagreeable and heavy job which could result in back problems for the driver.

The object of the present invention is to provide such a partition wall which can be tilted upward with less effort.

This object is achieved in that the partition wall comprises at least two panels which are mutually displaceable in axial direction between a first position, in which both panels make contact with the nearest side wall and a space is left clear between the panels, and a second position, in which both panels make mutual contact and a gap is enclosed between each of the panels and the associated side wall.

As a consequence of the first part-measure, for instance dividing the partition wall into two panels which can be moved independently, there results the advantage of a lighter weight; such panels can thus be moved upward with less exertion. Because of the fact that the panels are axially displaceable along the shaft it is possible to move each of the panels away from the side wall during upward tilting, so that the friction force between the seal and the side wall can be reduced to zero.

In order to maintain the insulating capacity of the partition wall in the closed position, the partition wall is adapted for thermal separation of the compartments, and each of the panels is provided on their mutually facing edge with an insulating element for maintaining a thermal insulation between both compartments at least in the first position at the location of the space between the panels.

According to a preferred embodiment of this measure, the insulating element comprises an H-profile arranged in mutual mirror symmetry on each of the relevant edges of the panel.

It will be apparent that instead of using the H-profile other profiles can be applied which are mutually engaging and which close an air chamber. It would even be possible to make use of a thermally insulating flexible material, for instance a polymer provided with a cellular structure.

It is noted herein that when profiles are used which slide into one another, both panels would have to be folded upward simultaneously.

According to another preferred embodiment the partition wall comprises axial displacing means for causing the panels to move away from the side walls during upward tilting of both panels adjoining the side walls.

This serves to facilitate operation of the partition wall during the upward movement.

According to another preferred embodiment the axial displacing means are adapted to cause the panels adjoining the side wall to move toward the side walls during downward tilting. This measure serves to facilitate operation during the downward movement of the side walls.

Advantageous embodiments of such displacing means are to be found in the remaining sub-claims.

The present invention will be elucidated hereinbelow with reference to the annexed drawings, in which:
Figure 1 shows a partly broken away perspective view of a truck provided with a partition wall according to the present invention;
Figure 2 is a partly broken away perspective detail view of the partition wall shown in figure 1; and
Figure 3 is a partly broken away perspective view of a variant of the embodiment shown in figure 2.

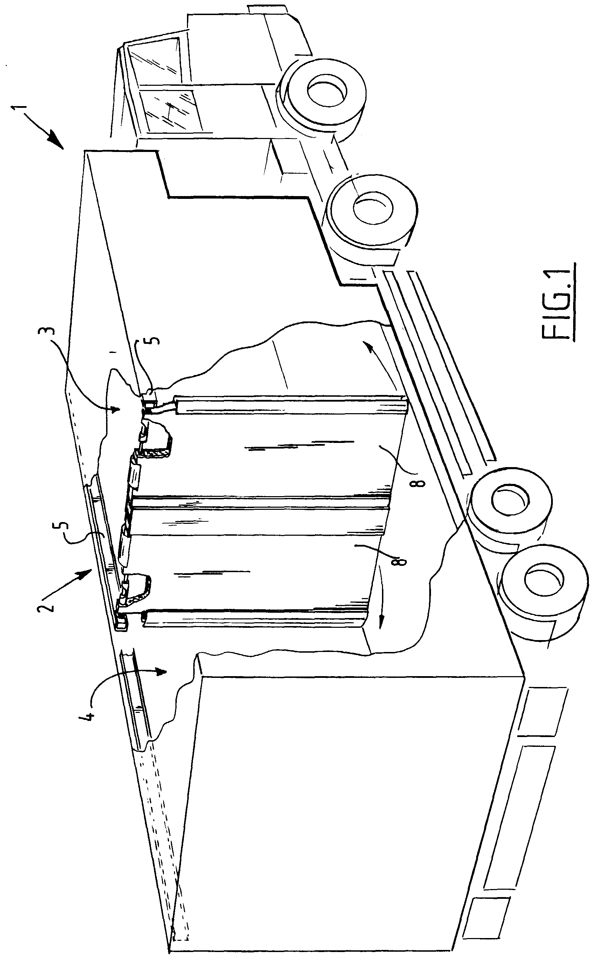

Figure 1 depicts a truck 1, in the loading space of which is arranged a partition wall 2. This latter divides the loading space of the truck into a first part 3 and a second part 4. Partition wall 2 is movable in lengthwise direction of the truck along guide rails 5 arranged on the top side of the side walls of the truck.

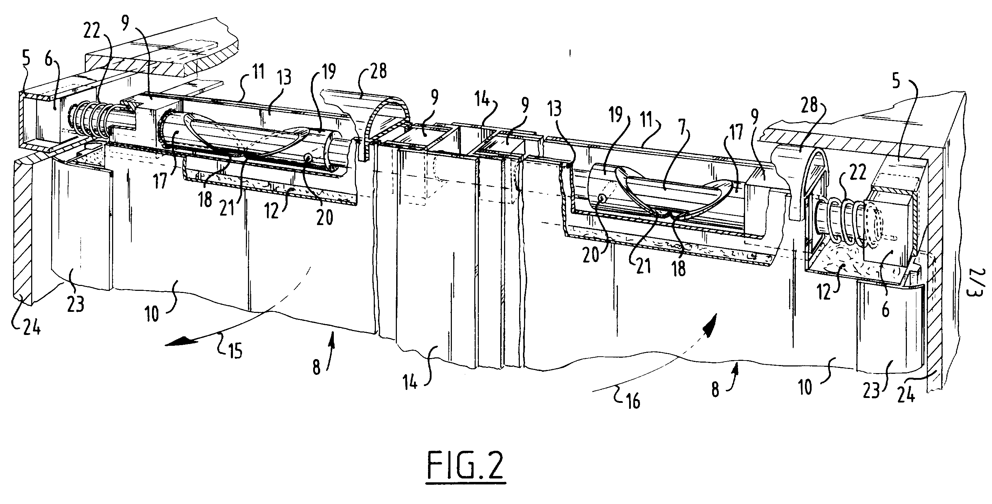

As shown in figure 2, bearing blocks 6 are arranged in guide rails 5, in which blocks is mounted a shaft 7. Essential is that shaft 7 is anchored fixedly in bearing blocks 6 so that shaft 7 cannot rotate inside the bearing blocks. By means of fixation means neither shown in the drawing nor forming part of the invention bearing blocks 6 can be fixed in different positions in guide rails 5. A first panel 8 is suspended rotatably from shaft 7 by means of bearing blocks 9. It is noted here that panel 8 is formed by two plastic walls 10,11 separated by a layer 12 of insulating material.

Both bearing blocks 9 are connected by a U-profile 13 to which both walls 10,11 are fixed. With the construction described up to this point the relevant panel can be folded against the ceiling. It should be noted here that bearing blocks 9 are not only rotatable relative to the shaft but are also displaceable in axial direction.

A similar construction is arranged on the other half of shaft 7. In order to arrange a seal between the two panels 8 an H-profile 14 is arranged on each of the panels, this such that the H-profiles are mirror-symmetrical. Both H-profiles enclose a space. This space of course has an insulating function. It will be apparent that with a view to strength it is important that an aluminium profile 14 is used, although to improve the insulation it is more attractive to use a plastic profile.

It is thus possible using these profiles to initially swing the panel shown on the left in figure 2 upward against the ceiling as according to arrow 15, while the right-hand panel can then be swung in the direction opposed to arrow 16. In contrast it is also possible to swing the right-hand panel upward to the other side in the direction of arrow 16.

In order to impose a movement in axial direction on both panels 8 a sleeve 17 is mounted on one of the pair of bearing blocks 9 to which each of the panels is fixed. Sleeve 17 is fixedly mounted on bearing block 9 so that sleeve 17 can rotate relative to shaft 7. The sleeve is provided with a sloping contact surface 18. In addition, a second sleeve 19 is arranged fixedly on shaft 7. Sleeve 19 is fixed on shaft 2 by means of a pin 20. Sleeve 19 is further provided with a sloping contact surface 21. Contact surfaces 21 and 18 are directed toward each other.

Finally, a spring 22 is arranged which extends between mounting block 6 and the closest bearing block 9, which spiral spring is wound round shaft 7. Spiral spring 22 has the function of pressing apart blocks 6,9 and thereby pressing contact surfaces 18 and 21 against each other. When panel 8 is moved upward, spring 22 will press both contact surfaces against each other so that with further upward movement the block 9 is pressed axially away to the left in the drawing, this being made possible by the slope of the contact surfaces, so that with further upward movement the whole panel 8 is displaced further towards the centre. A sealing profile 23 arranged on the side edge of panel 8 hereby detaches from side wall 24 so that the friction forces are eliminated.

In the above shown embodiment the contact surfaces are flat. It is possible instead to make use of curved contact surfaces, which provides the option of causing a large axial displacement to take place particularly at the beginning of the movement and of making the axial displacement as small as possible during the rest of the tilting movement. Thus is achieved that after having progressed through a small part of the tilting movement the profile 23 is already detached from the side wall, so that the friction forces are eliminated at that position.

It will be apparent that the construction arranged on the right-hand side is identical and does not therefore have to be elucidated further.

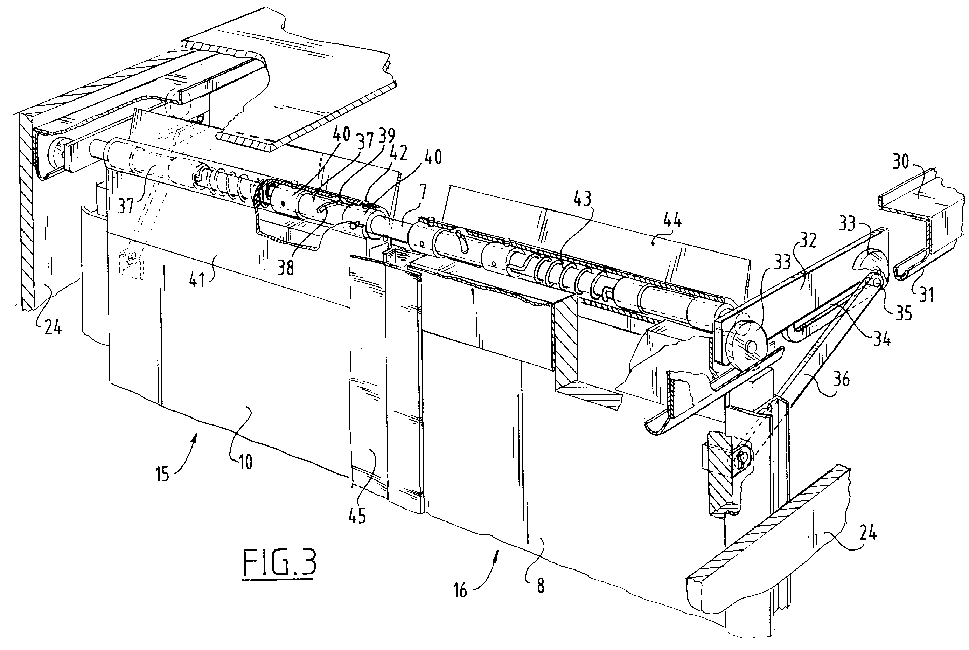

Finally, figure 3 shows an alternative embodiment. In this embodiment elements corresponding with associated elements in figure 2 are designated with the same reference numerals.

The embodiment shown in figure 3 deviates in that the profile 5 has been deleted and has been replaced by two profiles 30,31 respectively. A carriage 32 provided with wheels 33 can travel in each of the profile combinations 30, 31 respectively. The shaft 7, which has as such not been amended relative to the earlier embodiment, is connected to two carriages 32. The lower side of the carriage 32 contains a groove 34 within which a pin 25 is movable. The pin 35 is connected to a lever 36 being rotatably connected to a panel 15,16 concerned.

Around the shaft 7 two sleeves 37 are provided rotatably for supporting the panel 15. Both sleeves 37 can rotate relative to the shaft 7, but can also shift in the axial direction relative to the shaft 7.

In each of the sleeves 37 at least one groove 38 has been provided, while at the location of the grooves 38 in the shaft 7 a fixed pin 39 has been fixed. This arrangement converts the rotation of the sleeve 37 automatically into an axial displacement. On both sides of the sleeve inserts 40 have been provided, around which a substantially U-shaped profile 41 has been located. The U-shaped profile 41 is connected to the sleeve 37 through the inserts 40 and by a screw connection 42 or otherwise. The panel per se is connected to the profile 41. The other panel 8 has been constructed and supported on a similar way.

Further, a torsion spring 43 has been provided in this embodiment, of which one end is connected with one of the sleeves, and the other end is connected to the shaft 7, in which the tilting of the panels is eased. This is, however, not a necessary feature, but only a preferred feature.

Further, the profile comprises flaps 44 to avoid leaking. On the location between both the H-shaped profiles 14 of the earlier embodiment have been replaced by rubber or plastic flaps 45.

Finally, it is noted that the U-shaped profile 13 is closed at its top in all embodiments by a sealing profile 28.

It is further noted that the present invention is of course not only applicable in trucks but also in smaller units such as delivery vans, or in other types of transport such as containers or railway wagons.

## Claims

1. Partition wall for separating two compartments in a vehicle, comprising:
- a shaft extending parallel to the wall;
- at least one panel which is suspended rotatably from the shaft with an edge so that the panel can be tilted against the ceiling; and
- locking means for locking the panel in the vertical and in the horizontal position,
**characterized in that**
- the partition wall comprises at least two panels which are mutually displaceable in axial direction between a first position, in which both panels make contact with the nearest side wall and a space is left clear between the panels, and a second position, in which both panels make mutual contact and a gap is enclosed between each of the panels and the associated side wall.

2. Partition wall as claimed in claim 1, **characterized in that** the partition wall is adapted for thermal separation of the compartments, and each of the panels is provided on their mutually facing edge with an insulating element for maintaining a thermal insulation between both compartments at least in the first position at the location of the space between the panels.

3. Partition wall as claimed in claim 2, **characterized in that** the insulating element comprises a flap arranged in mutual mirror symmetry on each of the relevant edges of the panel.

4. Partition wall as claimed in claim 1, 2 or 3, **characterized in that** the partition wall comprises axial displacing means for causing the panels to move away from the side walls during upward tilting of both panels adjoining the side walls.

5. Partition wall as claimed in claim 4, **characterized in that** the axial displacing means are adapted to cause the panels adjoining the side wall to move toward the side walls during downward tilting.

6. Partition wall as claimed in claim 4 or 5, **characterized in that** the axial displacing means comprise at least one sleeve arranged fixedly on the shaft and provided with a sloping contact surface and a sleeve connected to the associated panel and provided with a sloping contact surface, wherein both contact surfaces are directed towards each other, in addition to means for urging the contact surfaces towards each other.

7. Partition wall as claimed in claim 4 or 5, **characterized in that** the partition wall comprises two panels and the axial displacing means comprise at least one sleeve connected to the first panel and provided with a sloping contact surface and a sleeve connected to the second panel and provided with a sloping contact surface, wherein both contact surfaces are directed towards each other, in addition to means for urging the contact surfaces towards each other.

8. Partition wall as claimed in claim 6 or 7, **characterized in that** the means for urging the contact surfaces towards each other comprise a spiral spring wound round the shaft, which spiral spring is dimensioned to generate a torque so as to facilitate tilting of the panels.

9. Partition wall as claimed in claim 4 or 5, **characterized in that** the axial displacing means comprise at least one protruding element and at least one sleeve with an obliquely extending groove, the sleeve by connecting with the panel, and wherein the rotating of the sleeve causes an axial displacement of the sleeve.

10. Partition wall as claimed in claim 9, **characterized in that** around the shaft a spring has been wound for exerting a force to ease the tilting of the panels.
